(19) Europäisches Patentamt
European Patent Office
Office européen des brevets

(11) Veröffentlichungsnummer : **0 453 449 B1**

(12) # EUROPÄISCHE PATENTSCHRIFT

(45) Veröffentlichungstag der Patentschrift :
**02.06.93 Patentblatt 93/22**

(51) Int. Cl.$^5$ : **D21C 5/02**

(21) Anmeldenummer : **90900179.4**

(22) Anmeldetag : **05.01.90**

(86) Internationale Anmeldenummer :
**PCT/EP90/00022**

(87) Internationale Veröffentlichungsnummer :
**WO 90/08219 26.07.90 Gazette 90/17**

(54) **VERFAHREN ZUR FLOTATION VON FÜLLSTOFFEN AUS ALTPAPIEREN IN GEGENWART SULFONATGRUPPENHALTIGER TENSIDE.**

(30) Priorität : **14.01.89 DE 3900940**

(43) Veröffentlichungstag der Anmeldung :
**30.10.91 Patentblatt 91/44**

(45) Bekanntmachung des Hinweises auf die Patenterteilung :
**02.06.93 Patentblatt 93/22**

(84) Benannte Vertragsstaaten :
**AT BE CH DE ES FR GB IT LI NL SE**

(56) Entgegenhaltungen :
**BULLETIN OF THE INSTITUTE OF PAPER CHEMISTRY vol. 51, Nr. 9, March 1981, APPLETON,US,page 985,Z.A. KOSTYLEVA et al.: "Flotation agent for deinking book-magazine waste paper"**

(56) Entgegenhaltungen :
**BULLETIN OF THE INSTITUE OF PAPER CHEMISTRY. vol. 57, Nr.5, November 1986, APPLETON,US,page 758,J. SHINODA et al.: "Ink-removing agent"**
**TAPPI JOURNAL, vol.69, Nr.3, March 1986, ATLANTA,US, pp. 102 - 106; T.H. QUICK et al.: "Xerography deinking - a fundamental approach"**

(73) Patentinhaber : **Henkel Kommanditgesellschaft auf Aktien**
**Postfach 1100 Henkelstrasse 67**
**W-4000 Düsseldorf-Holthausen (DE)**

(72) Erfinder : **BEHLER, Ansgar**
**Siegfriedstrasse 80**
**W-4250 Bottrop (DE)**
Erfinder : **HÖFER, Rainer**
**Klever Strasse 31**
**W-4000 Düsseldorf (DE)**
Erfinder : **HORNFECK, Klaus**
**August-Burberg-Strasse 34**
**W-4020 Mettmann (DE)**
Erfinder : **VON RYBINSKI, Klaus**
**Leinenweberweg 12**
**W-4000 Düsseldorf 13 (DE)**

**EP 0 453 449 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Entfernung von Füllstoffen aus Altpapieren sowie die Verwendung bestimmter sulfonatgruppenhaltiger Tenside zur Entfernung von Füllstoffen aus Altpapieren.

Fast alle Papiere werden mit Füllstoffen versetzt, um ihre Bedruckbarkeit, Dichtigkeit und Opazität zu verbessern sowie eine gleichmäßigere Durchsicht und einen größeren Weißgrad zu erhalten. Die zum Einsatz gelangenden Füllstoffe sind mineralischer Natur oder chemisch gefällte Produkte, beispielsweise Aluminiumsilikate, wie Kaoline oder kieselsaure Tonerde, Calciumcarbonate, wie Kreide oder Kalk, Talkum, Calciumsulfat und/oder Bariumsulfat (Ullmanns Encyklopädie der technischen Chemie 17, 577 ff. (1979)). Der Füllstoffanteil in der Papiermasse hängt vom Verwendungszweck des Papiers ab und liegt in den meisten Fällen zwischen 7 und 25 Gew.-%. Um ein Papier mit standardisierten Qualitätsmerkmalen herstellen zu können, ist es unerläßlich, daß die zur Papierherstellung notwendigen Roh- und Hilfsstoffe eine gleichbleibende Qualität aufweisen.

Bedruckte Altpapiere werden in großen Mengen bei der Erzeugung von Druck- und Tissuepapieren eingesetzt. Zur Erzielung einer hohen Papierweiße müssen die Druckfarben aus bedruckten Altpapieren entfernt werden. Dies geschieht mittels Deinking-Verfahren, die im wesentlichen in 2 Teilschritten ablaufen:

1. Aufschlagen der Altpapiere, d.h. Zerfasern in Wasser bei gleichzeitigem Einwirken der für die Ablösung der Druckfarbenteilchen benötigten Chemikalien und
2. Ausscheidung der abgelösten Druckfarbenteilchen aus der Faserstoffsuspension.

Der zweite Verfahrensschritt kann durch Auswaschen oder Flotation erfolgen (Ullmanns Encyklopädie der technischen Chemie, 4. Auflage, Band 17, Seiten 570 - 571 (1979)) oder zweistufig durch eine Kombination der beiden oder durch zwei hintereinander geschalteten Flotationsstufen erfolgen (TAPPI Journal, Band 69, No.3, März 1986, Seiten 102 - 106). Bei der Flotation, bei der die unterschiedliche Benetzbarkeit von Druckfarben und Papierfasern ausgenutzt wird, wird Luft durch die Faserstoffsuspensionen gedrückt oder gesaugt. Dabei verbinden sich kleine Luftbläschen mit den Druckfarbenteilchen und bilden an der Wasseroberfläche einen Schaum, der mit Stoffängern entfernt wird.

Üblicherweise wird das Deinken von Altpapieren bei alkalischen pH-Werten in Gegenwart von Alkalihydroxiden, Alkalisilikaten, oxidativ wirkenden Bleichmitteln und oberflächenaktiven Substanzen bei Temperaturen zwischen 30 und 50 °C durchgeführt. Als oberflächenaktive Substanzen, die das Ablösen und Abtrennen der Druckfarben bewirken, werden in vielen Fällen Seifen und/oder Fettalkoholpolyglykolether eingesetzt (Ullmanns Encyklopädie der technischen Chemie, 4. Auflage, Band 17, Seiten 571 - 572 (1979)). Aus JP 61/207686, referiert in Chem. Abstr. 106, 121694 v wird die Verwendung aliphatischer $\alpha$-Sulfo-carbonsäuren und aliphatischer $\alpha$-Sulfo-carbonsäureester in Flotation-Deinking-Verfahren beschrieben. In den russischen Schutzrechten SU-A-773 174, referiert in Derwent 51102 D/28, sowie SU-A-717 195, referiert in Derwent 72992 C/41, wird beschrieben, daß gute Ergebnisse bei der Druckfarbenflotation erzielt werden, wenn Altpapiere mit alkylsulfonat- und seifenhaltigen Mischungen behandelt werden. Gemäß US-A-1 925 372 lassen sich besonders gute Deinking-Ergebnisse erzielen, wenn füllstoffhaltige Altpapiere mit wäßrigen Lösungen, enthaltend Seifen und/oder sulfonierte Mineralöle, behandelt werden und anschließend die Papierfasern durch Filtration abgetrennt werden. Im Falle füllstofffreier bedruckter Altpapiere werden Füllstoffe separat zugesetzt.

Die bekannten Verfahren zur Ausscheidung der abgelösten Druckfarbenteilchen aus den Faserstoffsuspensionen weisen jedoch gravierende Nachteile auf: Durch Flotation wird der hohe Füllstoffanteil in Altpapieren nur sehr unvollständig entfernt, so daß der Anteil an deinktem Altpapier bei der Papierherstellung, insbesondere bei der Herstellung von Zeitungsdruckpapieren, auf etwa 50 Gew.-% begrenzt wird. Durch Wäsche der Papierfasern werden die in Altpapieren enthaltenen Füllstoffe entfernt, jedoch mit dem Nachteil eines sehr hohen Faserverlustes und einer sehr starken Wasserbelastung.

Aus "Wochenblatt für Papierfabrikation" 17, 646 - 649 (1985) ist bekannt, daß der Füllstoffaustrag durch Flotation gesteigert werden kann, wenn Altpapiere nicht mit wäßrigen Flotten, die Seifen oder nichtionische Tenside enthalten, behandelt werden, sondern mit wäßrigen Flotten, die als Tenside insbesondere Alkylbenzolsulfonate enthalten. Diese Verbesserung des Füllstoffaustrages reicht jedoch in vielen Fällen nicht aus, die hohen Anforderungen, die an die Qualität wiedereinsetzbarer Altpapiere gestellt werden, zu erfüllen.

Die Aufgabe der Erfindung bestand daher in der Entwicklung eines Verfahrens, mit dem eine deutliche Steigerung des Füllstoffaustrages aus Altpapieren erzielt werden kann.

Die Erfindung geht von der überraschenden Feststellung aus, daß der Füllstoffaustrag aus wäßrigen Papierstoffsuspensionen in Gegenwart bestimmter sulfonatgruppenhaltiger Tenside deutlich erhöht wird.

Gegenstand der Erfindung ist dementsprechend ein Verfahren zur Entfernung von Füllstoffen aus Altpapieren durch Zugabe eines oder mehrerer sulfonatgruppenhaltigen Tenside und anschließende Flotation, welches dadurch gekennzeichnet ist, daß man nach der Druckfarbenflotation den wäßrigen Papierstoffsuspensionen ein oder mehrere sulfonatgruppenhaltige Tenside aus den Gruppen

a) α-Sulfofettsäuren und/oder α-Sulfofettsäureester der allgemeinen Formel I

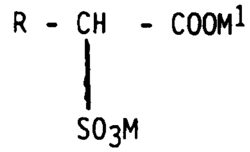

in der die Reste R $C_{6-20}$-Alkyl, M Wasserstoff, ein Alkalimetall- oder Ammoniumkation und Mt Wasserstoff, ein Alkalimetall- oder Ammoniumkation oder $C_{1-4}$-Alkyl bedeuten, und/oder

b) Alkali-, Ammonium- und/oder Aminsalze sulfonierter ungesättigter Fettsäuren mit 12 bis 22 C-Atomen und/oder

c) Alkali-, Ammonium- und/oder Aminsalze von Sulfobernsteinsäuremono- und/oder -diestern und/oder Sulfobernsteinsäuremono- und /oder -diamiden und/oder

d) sekundäre Alkansulfonate mit 11 bis 17 C-Atomen in Form ihrer Alkali-, Ammonium- und/oder Aminsalze

in einer Gesamtmenge von 0,1 bis 8 g/kg lufttrockenem Papierstoff zusetzt.

Weiterer Erfindungsgegenstand ist die Verwendung von einem oder mehreren sulfonatgruppenhaltigen Tensiden der Gruppen a) bis d) zur Entfernung von Füllstoffen aus Altpapieren durch Flotation.

Unter luftrockenem Papierstoff versteht man, wenn sich im Papierstoff ein Gleichgewichtszustand an innerer Feuchte eingestellt hat. Dieser ist von der Temperatur und der relativen Feuchte der Luft abhängig.

Unter dem Begriff "Füllstoffe" werden die in der Papierindustrie üblicherweise verwendeten Substanzen, beispielsweise Aluminiumsilikate wie Kaoline oder kieselsaure Tonerde und/oder Calciumcarbonate wie Kreide oder Kalk verstanden.

Bevorzugt eingesetzte α-Sulfofettsäuren und/oder α-Sulfofettsäureester in Form ihrer Alkali- und/oder Ammoniumsalze leiten sich von gesättigten $C_{12-18}$-Fettsäuren und/oder -estern sowie von Mischungen, die überwiegend gesättigte $C_{12-18}$-Fettsäuren und/oder -ester enthalten, ab, beispielsweise Natriumsalze von α-Sulfotalgfettsäuremethylester, α-Sulfokokosfettsäure und/oder α-Sulfopalmkernfettsäuremethylester. Die α-Sulfofettsäuren und α-Sulfofettsäureester werden durch Sulfonierung der entsprechenden Fettsäuren und/oder Fettsäureester erhalten. Als Sulfonierungsreagenz dienen $SO_3$-haltige Gasgemische (Ullmanns Encyklopädie der technischen Chemie, 4. Auflage, Band 22, Seite 482, Verlag Chemie Weinheim (1982)).

Alkali-, Ammonium- und/oder Aminsalze sulfonierter ungesättigter Fettsäuren mit 12 bis 22 C-Atomen sind ebenfalls nach bekannten Verfahren zugänglich. Ihre Herstellung geht aus von einfach und/oder mehrfach ungesättigten Fettsäuren mit 12 bis 22 C-Atomen, vorzugsweise mit 16 bis 22 C-Atomen, beispielsweise Palmitoleinsäure, Ölsäure, Elaidinsäure, Linolsäure, Linolensäure, Erucasäure oder Mischungen solcher ungesättigter Fettsäuren. Die Sulfonierung ungesättigter Fettsäuren kann mit Schwefelsäure, Chlorsulfonsäure oder $SO_3$-haltigen Gasgemischen durchgeführt werden. Vorzugsweise wird jedoch gemäß GB-A-1 278 421 bei Temperaturen zwischen 20 und 60 °C mit Gasgemischen aus $SO_3$ und Luft oder Inertgasen, beispielsweise Stickstoff, in denen der $SO_3$-Gehalt zwischen 1 und 15 Vol.-% liegt, sulfoniert. Die Sulfonierungen werden in üblichen für die Sulfonierung von Fettsäureestern oder Olefinen geeigneten und gebräuchlichen Reaktoren, vorzugsweise vom Typ des Fallfirmreaktors kontinuierlich oder diskontinuierlich durchgeführt (Kirk-Othmer: Encyclopedia of Chemical Technology 22, 28f (1983)). Nach beendeter Sulfonierung wird das Reaktionsgemisch mit Alkalien, beispielsweise NaOH, KOH, Ammoniak und/oder Ethanolaminen, in Form wäßriger Lösungen hydrolisiert.

Alkali-, Ammonium- und/oder Aminsalze von Sulfobernsteinsäuremono- und/oder -diestern und/oder Sulfobernsteinsäuremono- und/oder -diamiden werden durch Umsetzung von Maleinsäuremono- und/oder -diester und/oder den entsprechenden Amiden mit Alkalihydogensulfiten, -sulfiten, -pyrosulfiten oder -disulfiten hergestellt (Ullmanns Encyklopädie der technischen Chemie, Band 22, Seiten 482 bis 483, Verlag Chemie Weinheim (1982)). Vorzugsweise werden Sulfobernsteinsäurediester und -diamide durch Umsetzung von Maleinsäureanhydrid mit etwa 2 Mol eines geradkettigen, verzweigtkettigen oder cyclischen Alkylalkohols oder des entsprechenden Alkylamids mit 4 bis 18 C-Atomen und anschließende Sulfierung in wäßrigen oder wäßrig/organischen Medien beispielweise mit Alkalidisulfiten, wie Natriumdisulfit, oder mit Alkalipyrosulfiten gemäß EP-A87 711 hergestellt. Bevorzugt werden Sulfobernsteinsäurediester von iso-Hexanol, iso-Octanol, iso-Nonanol, iso-Decanol und/oder iso-Tridecanol alleine oder in Kombination mit Sulfobernsteinsäureediestern der entsprechenden geradkettigen linearen Alkylalkohole.

Sulfobernsteinsäuremonoester und Sulfobernsteinsäuremonoamide werden vorzugsweise durch Reaktion von Maleinsäureanhydrid mit etwa einem Mol eines geradkettigen, verzweigtkettigen oder cyclischen, gegebenenfalls alkoxylierten Alkylalkohols oder eines gegebenenfalls alkoxylierten Mono-, Di- oder Trialkylphenols mit 1 bis 12 C-Atomen in jeder Alkylkette oder eines geradkettigen, verzweigtkettigen oder cyclischen, gegebenenfalls alkoxylierten Alkylamins zum Maleinsäurehalbester oder Maleinsäurehalbamid umgesetzt. Anschließend wird mit beispielsweise Natrium- oder Ammoniumsulfit sulfiert. Vorzugsweise werden Sulfobernsteinsäuremonoester von $C_{8-18}$-Alkylalkoholen mit 0 bis 30 Mol Ethylenoxid und/oder Sulfobernsteinsäuremonoester von iso-Octyl-, iso-Nonyl- und/oder iso-Dodecylphenolen mit 3 bis 30 Mol Ethylenoxid eingesetzt.

Für das erfindungsgemäße Verfahren eignen sich ferner Alkali-, Ammonium- und/oder Aminsalze von sekundären Alkylsulfonaten mit 11 bis 17 C-Atomen, die großtechnisch durch Umsetzung geradkettiger Paraffine mit beispielsweise $SO_2$ und Sauerstoff in Gegenwart radikalbildender Stoffe wie Ozon, organischen Peroxiden oder UV-Licht hergestellt werden können (Winnacker/Küchler in "Chemische Technologie", 4. Auflage, Band 7, Seite 114 bis 116, Karl Hanser Verlag München 1986).

Nach der Druckfarbenflotation werden die wäßrigen Papierstoffsuspensionen erfindungsgemäß mit vorzugsweise 1 bis 4 g sulfonatgruppenhaltigen Tensiden/kg lufttrockenem Papierstoff bei 20 bis 60 °C versetzt. Der pH-Wert der Suspensionen liegt zwischen 7 und 11, vorzugsweise zwischen 8 und 10. Der Papierstoffgehalt liegt in den Suspensionen beispielsweise zwischen 0,5 und 2 Gew.-%. Anschließend wird in an sich bekannter Weise bei Temperaturen zwischen 20 und 95 °C, vorzugsweise zwischen 45 und 60 °C, in beispielsweise einer Denverflotationszelle flotiert.

Die nach dem erfindungsgemäßen Verfahren erhaltenen Faserstoffe zeichnen sich im Vergleich zu Faserstoffen, die in Gegenwart üblicher Tenside flotiert wurden, durch deutlich geringere Füllstoffgehalte aus. Mit dem erfindungsgemäßen Verfahren ist nunmehr die Möglichkeit gegeben, den Anteil an de-inktem Altpapier bei der Papierherstellung auf über 50 Gew.-% zu steigern.

## Beispiele

Die Flotationen wurden in einer Denver-Laborflotationszelle von etwa 9 l Inhalt an wäßrigen Füllstoffsuspensionen sowie an wäßrigen Papierstoffsuspensionen durchgeführt.

### Beispiel 1: Füllstoffsuspensionen

23 g Füllstoffe wurden in 9 l Wasser dispergiert und mit Natronlauge auf einen pH-Wert von 8,5 bis 9,0 eingestellt. Nach Zugabe von 0,2 g Aktivsubstanz sulfonatgruppenhaltigem Tensid wurde sieben Minuten in einer Denver-Laborflotationszelle flotiert. Der in dem Überlauf der Flotationszelle enthaltene Feststoffanteil wurde abfiltriert, bei 105 °C bis zur Gewichtskonstanz getrocknet und gewogen. Die Ergebnisse sind in Tabelle 1 zusammengefaßt.

Tabelle 1:

| eingesetzte Tenside | eingesetzte Füllstoffe | Füllstoff aus dem Überlauf in Gew.-% |
|---|---|---|
| Sulfobernsteinsäure-mono-$C_{12-18}$-alkylester, Natriumsalz | Kaolin | 94 |
| | $CaCO_3$ | 64 |
| | Kaolin/$CaCO_3$$^{x)}$ | 77 |
| Ölsäuresulfonat, Natriumsalz | Kaolin | 80 |
| | $CaCO_3$ | 82 |
| | Kaolin/$CaCO_3$$^{x)}$ | 61 |
| zum Vergleich: | | |
| n-Dodecylbenzolsulfonat, Natriumsalz | Kaolin | 3 |
| | $CaCO_3$ | 4 |
| | Kaolin/$CaCO_3$$^{x)}$ | 4 |
| α-$C_{14-16}$-Olefinsulfonat, Natriumsalz | Kaolin | 42 |
| | $CaCO_3$ | 43 |
| | Kaolin/$CaCO_3$$^{x)}$ | 60 |
| Dodecyldiphenyletherdisulfonat, Natriumsalz | Kaolin | 30 |
| | $CaCO_3$ | 72 |
| | Kaolin/$CaCO_3$$^{x)}$ | 34 |

x) Gemisch aus 70 Gew.-% Kaolin und 30 Gew.-% $CaCO_3$

Beispiel 2: Papierstoffsuspensionen

Lufttrockener Papierstoff aus Zeitungen und Illustrierten (Gewichtsverhältnis 1 : 1) wurde mit den üblicherweise eingesetzten Chemikalien einer Druckfarbenflotation unterzogen. Nach der Druckfarbenflotation hatte die Papierstoffsuspension eine Stoffdichte von 1 Gew.-%, eine Temperatur von 40 °C, einen pH-Wert von 9,0 und einen Aschegehalt von 16 Gew.-%. Zu 9 l der deinkten Papierstoffsuspension mit einer Stoffdichte von 1 Gew.-% wurden 0,2 g Aktivsubstanz sulfonatgruppenhaltiges Tensid zugesetzt und 10 Minuten in einer Denver-Laborflotationszelle flotiert. Nach der Flotation wurde der Papierstoff über Papierfilter entwässert, bis zur Gewichtskonstanz bei 105 °C getrocknet und nach DIN 54 371 der Aschegehalt bestimmt. Die Ergebnisse sind in Tabelle 2 zusammengefaßt.

Tabelle 2:

| eingesetzte Tenside | Füllstoffgehalt nach der Flotation im Papier in Gew.-% |
|---|---|
| Ölsäuresulfonat, Natriumsalz | 6,0 |
| Sulfobernsteinsäuremono-$C_{12-18}$-alkylester, Natriumsalz | 5,3 |

**Patentansprüche**

1. Verfahren zur Entfernung von Füllstoffen aus Altpapieren durch Zugabe eines oder mehrerer sulfonatgruppenhaltigen Tenside und anschließende Flotation, dadurch gekennzeichnet, daß man nach der Druckfarbenflotation den wäßrigen Papierstoffsuspensionen ein oder mehrere sulfonatgruppenhaltige Tenside aus den Gruppen

    a) α-Sulfofettsäuren und/oder α-Sulfofettsäureester der allgemeinen Formel I

    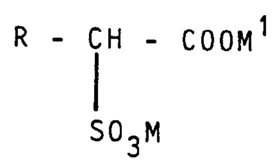

    in der die Reste R $C_{6-20}$-Alkyl, M Wasserstoff, Alkalimetall- oder Ammoniumkation und $M^1$ Wasserstoff, Alkalimetallkation, Ammoniumkation oder $C_{1-4}$-Alkyl bedeuten, und/oder

    b) Alkali-, Ammonium- und/oder Aminsalze sulfonierter ungesättigter Fettsäuren mit 12 bis 22 C-Atomen und/oder

    c) Alkali-, Ammonium- und/oder Aminsalze von Sulfobernsteinsäuremono- und/oder -diestern und/oder Sulfobernsteinsäuremono- und/oder -diamiden und/oder

    d) sekundäre Alkansulfonate mit 11 bis 17 C-Atomen in Form ihrer Alkali-, Ammonium- und/oder Aminsalze

    in einer Gesamtmenge von 0,1 bis 8 g/kg lufttrockenem Papierstoff zusetzt.

2. Verfahren nach Anspruch 1 dadurch gekennzeichnet, daß man den Papierstoffsuspensionen sulfonatgruppenhaltige Tenside a) bis d) in einer Gesamtmenge von 1 bis 4 g/kg lufttrockenem Papierstoff zusetzt.

3. Verfahren nach einem oder beiden der Ansprüch 1 bis 2 dadurch gekennzeichnet, daß den Suspensionen
a) α-Sulfofettsäuren und/oder α-Sulfofettsäureester der allgemeinen Formel I, in der R einen $C_{10-16}$-Alkylrest, M ein Alkalimetall- oder Ammoniumkation und $M^1$ ein Alkalimetall- oder Ammoniumkation oder einen $C_{1-4}$-Alkylrest bedeutet, und/oder
b) Alkali-, Ammonium- und/oder Aminsalze sulfonierter, ungesättigter Fettsäuren mit 16 bis 22 C-Atomen und/oder
c) Alkali-, Ammonium- und/oder Aminsalze von Sulfobernsteinsäuremonoestern von $C_{8-18}$-Alkylalkoholen mit 0 bis 30 Mol Ethylenoxid und/oder iso-Octyl-, iso-Nonyl- und/oder iso-Dodecylphenolen mit 3 bis 30 Mol Ethylenoxid und/oder Sulfobernsteinsäuredi-$C_{6-14}$-alkylestern einsetzt.

4. Verwendung von einem oder mehreren sulfonatgruppenhaltigen Tensiden aus den Gruppen
a) α-Sulfofettsäuren und/oder α-Sulfofettsäureester der allgemeinen Formel I

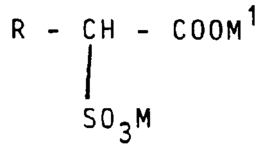

in der die Reste R $C_{6-20}$-Alkyl, M Wasserstoff, Alkalimetallkation oder Ammoniumkation und $M^1$ Wasserstoff, Alkalimetallkation, Ammoniumkation oder $C_{1-4}$-Alkyl bedeuten, und/oder
b) Alkali-, Ammonium- und/oder Aminsalze sulfonierter, ungesättigter Fettsäuren mit 12 bis 22 C-Atomen und/oder
c) Alkali-, Ammonium- und/oder Aminsalze von Sulfobernsteinsäuremono- und/oder -diester und/oder Sulfobernsteinsäuremono- und/oder -diamiden und/oder
d) sekundäre Alkansulfonate mit 11 bis 17 C-Atomen in Form ihrer Alkali-, Ammonium- und/oder Aminsalze
zur Entfernung von Füllstoffen aus Altpapieren durch Flotation.

5. Verwendung nach Anspruch 4, dadurch gekennzeichnet, daß die sulfonatgruppenhaltigen Tenside a) bis d) in den wäßrigen Papierstoffsuspensionen in einer Gesamtmenge von 0,1 bis 8 g/kg lufttrockenem Papierstoff, vorzugsweise von 1 bis 4 g/kg lufttrockenem Papierstoff verwendet werden.

6. Verwendung nach einem oder beiden der Ansprüche 4 bis 5, dadurch gekennzeichnet, daß
a) α-Sulfofettsäuren und/oder α-Sulfofettsäureester der allgemeinen Formel I, in der R einen $C_{10-16}$-Alkylrest, M ein Alkalimetall- oder Ammoniumkation und $M^1$ ein Alkalimetall- oder Ammoniumkation oder einen $C_{1-4}$-alkylrest bedeutet, und/oder
b) Alkali-, Ammonium- und/oder Aminsalze sulfonierter, ungesättigter Fettsäuren mit 16 bis 22 C-Atomen und/oder
c) Alkali-, Ammonium- und/oder Aminsalze von Sulfobernsteinsäuremonoestern von $C_{8-18}$-Alkylalkoholen mit 0 bis 30 Mol Ethylenoxid und/oder iso-Octyl-, iso-Nonyl- und/oder iso-Dodecylphenolen mit 3 bis 30 Mol Ethylenoxid und/oder Sulfobernsteinsäuredi-$C_{6-14}$-alkylestern
verwendet werden.

## Claims

1. A process for the removal of fillers from wastepaper by addition of one ore more surfactants with sulfonate-groups and subsequent flotation, characterized in that, after flotation of the printing ink, one or more sulfonate-group-containing surfactants from the groups
a) α-sulfofatty acids and/or α-sulfofatty acid esters corresponding to general formula I

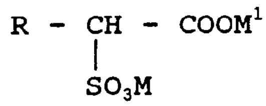

in which R is $C_{6-20}$ alkyl, M is hydrogen, an alkali metal or ammonium cation and $M^1$ is hydrogen, an alkali metal or ammonium cation or $C_{1-4}$ alkyl, and/or

b) alkali, ammonium and/or amine salts of sulfonated unsaturated $C_{12-22}$ fatty acids and/or

c) alkali, ammonium and/or amine salts of sulfosuccinic acid mono- and/or diesters and/or sulfosuccinic acid mono- and/or diamides and/or

d) secondary $C_{11-17}$ alkane sulfonates in the form of their alkali, ammonium and/or amine salts

is/are added to the aqueous paper stock suspensions in a total quantity of from 0.1 to 8 g/kg air-dry paper stock, followed by flotation in known manner.

**2.** A process as claimed in claim 1, characterized in that sulfonate-group-containing surfactants a) to d) are added to the paper stock suspensions in a total quantity of 1 to 4 g/kg air-dry paper stock.

**3.** A process as claimed in one or both of claims 1 to 2, characterized in that

a) α-sulfofatty acids and/or α-sulfofatty acid esters corresponding to general formula I, in which R is a $C_{10-16}$ alkyl radical, M is an alkali metal or ammonium cation and $M^1$ is an alkali metal or ammonium cation or a $C_{1-4}$ alkyl radical, and/or

b) alkali, ammonium and/or amine salts of sulfonated, unsaturated $C_{16-22}$ fatty acids and/ or

c) alkali, ammonium and/or amine salts of sulfosuccinic acid monoesters of $C_{8-18}$ alkyl alcohols with 0 to 30 mol ethylene oxide and/or iso-octyl, iso-nonyl and/or isododecyl phenols with 3 to 30 mol ethylene oxide and/or sulfosuccinic acid di-$C_{6-14}$-alkyl esters,

are added to the suspensions.

**4.** The use of one or more sulfonate-group-containing surfactants from the groups

a) α-sulfofatty acids and/or α-sulfofatty acid esters corresponding to general formula I

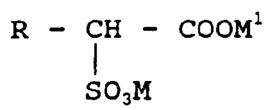

in which R is $C_{6-20}$ alkyl, M is hydrogen, an alkali metal or ammonium cation and $M^1$ is hydrogen, an alkali metal or ammonium cation or $C_{1-4}$ alkyl, and/or

b) alkali, ammonium and/or amine salts of sulfonated unsaturated $C_{12-22}$ fatty acids and/or

c) alkali, ammonium and/or amine salts of sulfosuccinic acid mono- and/or diesters and/or sulfosuccinic acid mono- and/or diamides and/or

d) secondary $C_{11-17}$ alkane sulfonates in the form of their alkali, ammonium and/or amine salts

for the removal of fillers from wastepaper by flotation.

**5.** The use claimed in claim 4, characterized in that the sulfonate-group-containing surfactants a) to d) are used in the aqueous paper stock suspensions in a total quantity of 0.1 to 8 g/kg air-dry paper stock and preferably in a total quantity of 1 to 4 g/kg air-dry paper stock.

**6.** The use claimed in one or both of claims 4 to 5, characterized in that

a) α-sulfofatty acids and/or α-sulfofatty acid esters corresponding to general formula I, in which R is a $C_{10-16}$ alkyl radical, M is an alkali metal or ammonium cation and $M^1$ is an alkali metal or ammonium cation or a $C_{1-4}$ alkyl radical, and/or

b) alkali, ammonium and/or amine salts of sulfonated, unsaturated $C_{16-22}$ fatty acids and/or

c) alkali, ammonium and/or amine salts of sulfosuccinic acid monoesters of $C_{8-18}$ alkyl alcohols with 0 to 30 mol ethylene oxide and/or iso-octyl, iso-nonyl and/or isododecyl phenols with 3 to 30 mol ethylene oxide and/or sulfosuccinic acid di-$C_{6-14}$-alkyl esters,

are used.

## Revendications

**1.** Procédé pour l'élimination des charges des vieux papiers par addition d'un ou plusieurs agents tensio-actifs contenant des groupes sulfonates et flottation subséquente, caractérisé en ce que l'on ajoute après la flottation des encres d'imprimerie, aux suspensions aqueuses de papiers un ou plusieurs agents tensio-actifs contenant des groupes sulfonates, choisis dans les groupes suivants :

a) acides gras α-sulfonés et/ou esters d'acide gras α-sulfonés de formule générale I

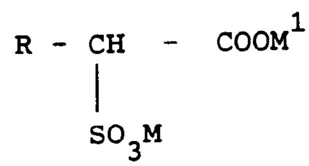

dans laquelle le radical R signifie un alcoyle en $C_{6-20}$, M un hydrogène, un cation de métal alcalin ou d'ammonium et $M^1$ de l'hydrogène, un cation de métal alcalin ou d'ammonium ou un alcoyle en $C_{1-4}$ et/ou

b) sels alcalins, d'ammonium et/ou d'amines d'acides gras non saturés, sulfonés, ayant de 12 à 22 atomes de carbone et/ou

c) sels de métal alcalin, d'ammonium et/ou d'amines de mono- et/ou de diesters d'acide sulfosuccinique et/ou de mono- et/ou de diamides d'acide sulfosuccinique et/ou

d) alcane-sulfonates secondaires, ayant de 11 à 17 atomes de carbone sous forme de leurs sels de métal alcalin, d'ammonium et/ou d'amine.

en quantité totale de 0,1 à 8 g/Kg de papier séché à l'air.

**2.** Procédé selon la revendication 1, caractérisé en ce que l'on ajoute aux suspensions de papier des agents tensio-actifs renfermant des groupes sulfonate du type a) à d) en quantité totale allant de 1 à 4 g/Kg de papier séché à l'air.

**3.** Procédé selon l'une ou les deux revendications 1 à 2, caractérisé en ce que l'on utilise pour les suspensions :

a) des acides gras α-sulfoniques et/ou des esters d'acides gras -α-sulfoniques de formule générale I dans laquelle R signifie un radical alcoyle en $C_{10-16}$, M signifie un cation de métal alcalin ou d'ammonium et $M^1$ signifie un cation de métal alcalin ou un cation ammonium ou un radical alcoyle en $C_{1-4}$ et/ou

b) des sels alcalins, d'ammonium et/ou d'amines d'acides gras insaturés sulfonatés ayant de 16 à 22 atomes de carbone et/ou

c) des sels alcalins d'ammonium et/ou d'amines de monoesters d'acide sulfosuccinique d'alcools alcoyliques en $C_{8-18}$ avec 0 à 30 mol d'oxyde d'éthylène et/ou d'iso-octyl-, d'iso-nonyl- et/ou d'iso-dodécylphénols avec de 3 à 30 mol d'oxyde d'éthylène et/ou de diesters alcoyliques en $C_{6-14}$ de l'acide sulfosuccinique.

**4.** Utilisation d'un ou plusieurs agents tensio-actifs contenant des groupes sulfonates choisis dans les groupes suivants :

a) acides gras α-sulfonés et/ou esters d'acide gras α-sulfonés de formule générale I

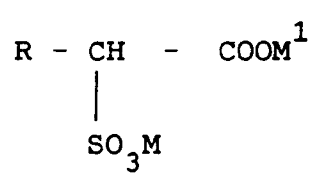

dans laquelle le radical R signifie un alcoyle en $C_{6-20}$, M un hydrogène, un cation de métal alcalin ou d'ammonium et $M^1$ de l'hydrogène, un cation de métal alcalin ou d'ammonium ou un alcoyle en $C_{1-4}$ et/ou

b) sels alcalins, d'ammonium et/ou d'amines d'acides gras non saturés, sulfonés ayant de 12 à 22 atomes de carbone et/ou

c) sels de métal alcalin, d'ammonium et/ou d'amines de mono- et/ou de diesters d'acide sulfosuccinique et/ou de mono- et/ou de diamides d'acide sulfosuccinique et/ou

d) alcane-sulfonates secondaires ayant de 11 à 17 atomes de carbone, sous forme de leurs sels de métal alcalin, d'ammonium et/ou d'amine.

pour l'élimination des charges des vieux papiers par flottation.

**5.** Utilisation selon la revendication 4, caractérisée en ce que les agents tensio-actifs contenant des groupes sulfonates a) à d) sont utilisés dans les suspensions aqueuses de papier en quantité totale de 0,1 à 8 g/Kg de papier séché à l'air, de préférence de 1 à 4 g/Kg de papier séché à l'air.

**6.** Utilisation selon l'une ou les deux revendications 4 à 5, caractérisée en ce que l'on utilise :

a) des acides gras $\alpha$-sulfonés et/ou des esters d'acide gras $\alpha$-sulfoné de formule générale I dans laquelle R signifie un radical alcoyle en $C_{10-16}$, M signifie un cation de métal alcalin ou d'ammonium et $M^1$ signifie un cation de métal alcalin, un cation d'ammonium ou un radical alcoyle en $C_{1-4}$ et/ou

b) des sels alcalins, d'ammonium et/ou d'amines d'acides gras insaturés sulfonatés ayant de 16 à 22 atomes de carbone et/ou

c) des sels alcalins, d'ammonium et/ou d'amines de monoesters d'acide sulfosuccinique d'alools alcoyliques en $C_{8-18}$ avec 0 à 30 mol d'oxyde d'éthylène, et/ou les esters d'iso-octyl-, d'iso-nonyl et/ou d'isododécylphénols avec 3 à 30 mol d'oxyde d'éthylène, et/ou les diesters alcoyliques en $C_{6-14}$ de l'acide sulfosuccinique.